Europäisches Patentamt

European Patent Office

Office européen des brevets

(11) Veröffentlichungsnummer: **0 485 825 A1**

# EUROPÄISCHE PATENTANMELDUNG

(21) Anmeldenummer: **91118694.8**

(22) Anmeldetag: **02.11.91**

(51) Int. Cl.5: **B01L 9/06**, G06K 7/10, G02B 6/00, G01N 35/00

(30) Priorität: **13.11.90 CH 3591/90**

(43) Veröffentlichungstag der Anmeldung: **20.05.92 Patentblatt 92/21**

(84) Benannte Vertragsstaaten: **CH DE FR GB IT LI NL**

(71) Anmelder: **F. HOFFMANN-LA ROCHE AG** **Postfach 3255** **CH-4002 Basel(CH)**

(72) Erfinder: **Hürlimann, Hans-Jörg** **Heinrichstrasse 12a** **CH-6331 Hünenberg(CH)**

(74) Vertreter: **Ventocilla, Abraham et al** **Grenzacherstrasse 124 Postfach 3255** **CH-4002 Basel(CH)**

(54) **Vorrichtung zur Identifikation von einem Behälter-Träger.**

(57) Vorrichtung zur Identifikation von einem Behälterträger (11) für ein automatisches Analysengerät, welcher Träger an einem scheibenförmigen Rand (12) eine Anordnung von Feldern (21-28) hat, wobei einige der Felder lichtdurchlässig und die übrigen Felder lichtundurchlässig sind, und welche Vorrichtung eine elektrooptische Einrichtung enthält, mit der feststellbar ist, ob jedes der Felder lichtdurchlässig oder lichtundurchlässig ist.

Zur Erhöhung der Zuverlässigkeit der Vorrichtung bei der Identifikation der Behälterträger ist sie dadurch gekennzeichnet , dass die elektrooptische Einrichtung folgende Komponenten enthält:

(a) eine Lichtquelle (14),

(b) eine Vielzahl von Lichtempfängern (31-38), die je einem der Felder (21-28) zugeordnet sind,

(c) einen Lichtleiter (15), der aus einem mit der Lichtquelle (14) erzeugten Lichtbündel (16) eine Vielzahl von Lichtstrahlen (41-48) erzeugt, die je gegen einen der Felder (21-28) gerichtet sind und durch die lichtdurchlässigen Felder die ihnen zugeordneten Lichtempfänger erreichen.

Fig. 1

EP 0 485 825 A1

Die Erfindung betrifft eine Vorrichtung zur Identifikation von einem Behälterträger für ein automatisches Analysengerät, welcher Träger an einem scheibenförmigen Rand eine Anordnung von Feldern hat, wobei einige der Felder lichtdurchlässig und die übrigen Felder lichtundurchlässig sind, und welche Vorrichtung eine elektrooptische Einrichtung enthält, mit der feststellbar ist, ob jedes der Felder lichtdurchlässig oder lichtundurchlässig ist.

Bei bekannten Vorrichtungen dieser Art sind pro Feld eine Lichtquelle und ein Lichtempfänger vorgesehen, die auf gegenüberliegenden Seiten des Feldes angeordnet sind. Ein von der Lichtquelle erzeugter Lichtstrahl wird gegen das Feld gerichtet. Ist das Feld lichtdurchlässig, fällt der Lichtstrahl auf den Lichtempfänger, der ein entsprechendes Ausgangssignal abgibt. Andernfalls gibt es kein Ausgangssignal. Auf diese Weise ist der Rack mit Hilfe eines binären Codes identifizierbar.

Ein beachtlicher Nachteil der bisher bekannten Vorrichtung liegt darin, dass das Fehlen eines Ausgangssignals eines Lichtempfängers nicht nur der Abtastung eines lichtundurchlässigen Feldes entsprechen kann, sondern auch durch eine defekte Lichtquelle verursacht werden kann. Dies bringt mit sich eine erhebliche Unsicherheit bei der Identifikation des Behälterträgers. Eine solche Unsicherheit darf bei vielen Anwendungen nicht in Kauf genommen werden. Dies ist insbesondere bei der Identifikation von Trägern für Behälter für biologische Proben in automatischen Analysensystemen der Fall, wie diejenige, die in medizinischen Diagnostiklabors verwendet werden.

Der Erfindung liegt daher die Aufgabe zugrunde, den oben angeführten Nachteil zu beheben.

Erfindungsgemäss wird diese Aufgabe mit einer Vorrichtung der eingangs angegebenen Art gelöst, welche dadurch gekennzeichnet ist, dass die elektrooptische Einrichtung folgende Komponenten enthält:

(a) eine Lichtquelle,

(b) eine Vielzahl von Lichtempfängern, die je einem der Felder zugeordnet sind,

(c) einen Lichtleiter, der aus einem mit der Lichtquelle erzeugten Lichtbündel eine Vielzahl von Lichtstrahlen erzeugt, die je gegen einen der Felder gerichtet sind und durch die lichtdurchlässigen Felder die ihnen zugeordneten Lichtempfänger erreichen.

Die mit der Erfindung erzielbaren Vorteile bestehen insbesondere darin, dass die Zuverlässigkeit der Vorrichtung zur Identifikation der Behälterträger höher ist, weil ein Ausfall der einzigen Lichtquelle mit Sicherheit vom System als eine Störung erfasst wird, was bei der Verwendung mehrerer Lichtquellen nicht möglich ist. Durch die Benutzung einer einzigen Lichtquelle wird ausserdem eine Reduktion des Materialaufwands erzielt.

Eine vorteilhafte Ausgestaltung der Erfindung ist dadurch gekennzeichnet, dass der Lichtleiter eine Lichtleitplatte enthält, die an einem Ende eine Lichteingangsstelle und am entgegengesetzten Ende eine Lichtausgangsstelle hat, dass die Lichtleitplatte eine gegenüber der Lichteingangsstelle liegende, nach innen reflektierende Fläche hat, die gegen die Längsachse der Lichtleitplatte geneigt ist, und dass die Lichtausgangsstelle eine Wand ist, welche zur Erzielung des achsparallelen Strahlenaustritts, Wandsegmente enthält, die mit einer zur Längsachse (Y-Y) der Lichtleitplatte normalen Ebene Winkel bilden, deren Grösse mit dem Abstand des Wandsegments von der Längsachse der Lichtleitplatte zunehmen.

Diese Ausgestaltung der Erfindung zeichnet sich durch eine einfache und dadurch zuverlässigere und relativ billige Ausführung des Lichtleiters aus.

Ein Ausführungsbeispiel der Erfindung wird im folgenden anhand der beiliegenden Zeichnungen beschrieben. Es zeigen:

Fig. 1    eine schematische, perspektivische Darstellung einer erfindungsgemässen Vorrichtung zur Identifikation eines Behälterträgers 11,

Fig. 2    eine Druntersicht einer Lichtleitplatte 51, die die Funktion des Lichtleiters 15 in Fig. 1 hat, und der damit verbundenen Elemente,

Fig. 3    einen Querschnitt der Anordnung gemäss Fig. 2 entlang der Linie II-II,

Fig. 4    die Druntersicht gemäss Fig. 2, in der zusätzlich das von einer Lichtquelle erzeugte Lichtbündel 16 und den Verlauf einiger Lichtstrahlen dargestellt wird,

Fig. 5    eine schematische Seitenansicht der Lichtleitplatte 51, in der der Verlauf eines Lichtstrahls 17 dargestellt wird,

Fig. 6    die Druntersicht gemäss Fig. 2, in der zusätzlich einige Abmessungen einer Ausführungsform der Lichtleitplatte 51 in Millimeter eingetragen sind,

Fig. 7    den Querschnitt gemäss Fig. 3, in dem zusätzlich einige Abmessungen einer Ausführungsform der Lichtleitplatte 51 in Millimeter eingetragen sind,

Fig. 8    eine Draufsicht eines Behälterträgers 11 für ein automatisches Analysensystem,

Fig. 9    einen Querschnitt des Behälterträgers 11 gemäss Fig. 8 entlang der Linie VIII-VIII.

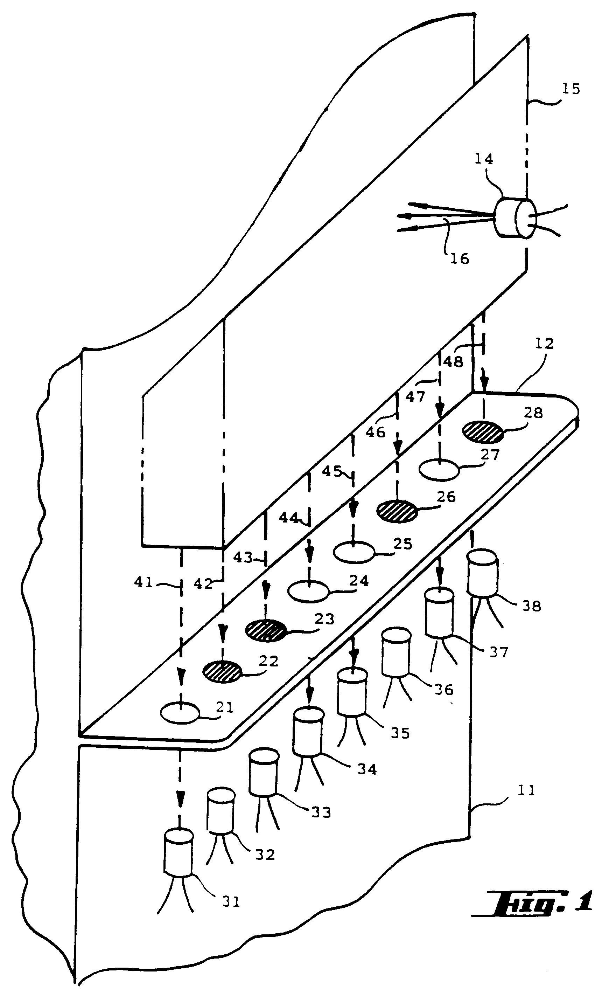

Fig. 1 zeigt eine schematische, perspektivische Darstellung einer erfindungsgemässen Vorrichtung zur Identifikation eines Behälterträgers 11, der in einem automatischen Analysengerät zur Aufnahme von Probenbehältern verwendet wird, die biologischen Proben enthalten. Im Analysengerät werden die Proben z.B. mittels geeignete Analyseverfahren untersucht. Der Träger 11 hat einen scheibenförmigen Rand 12, der eine Anordnung von Feldern 21-28 enthält, wobei einige der Felder, z.B. Felder 21, 24, 25, 27 lichtdurchlässig und die übrigen Felder 22, 23, 26, 28 lichtundurchlässig sind. Ein lichtdurchlässiges Feld kann z.B. durch eine Oeffnung an einer bestimmten Stelle des Randes 12 gebildet werden. Umgekehrt kann das Fehlen einer solchen Oeffnung an einer bestimmten Stelle des Randes 12 ein lichtundurchlässiges Feld bilden. Die Vorrichtung gemäss Fig. 1 enthält ferner eine elektrooptische Einrichtung, mit der feststellbar ist, ob jedes der Felder 21-28 lichtdurchlässig oder lichtundurchlässig ist. Die elektrooptische Einrichtung enthält folgende Komponenten: eine einzige Lichtquelle 14, eine Vielzahl von Lichtempfängern 31-38, die je einem der Felder zugeordnet sind, und einen in Fig. 1 schematisch dargestellten Lichtleiter 15, der aus einem mit der Lichtquelle 14 erzeugten Lichtbündel 16 eine Vielzahl von Lichtstrahlen 41-48 erzeugt, die je gegen einen der Felder 21-28 gerichtet sind und durch die lichtdurchlässigen Felder 21, 24, 25, 27 die ihnen zugeordneten Lichtempfänger 31, 34, 35, 37 erreichen.

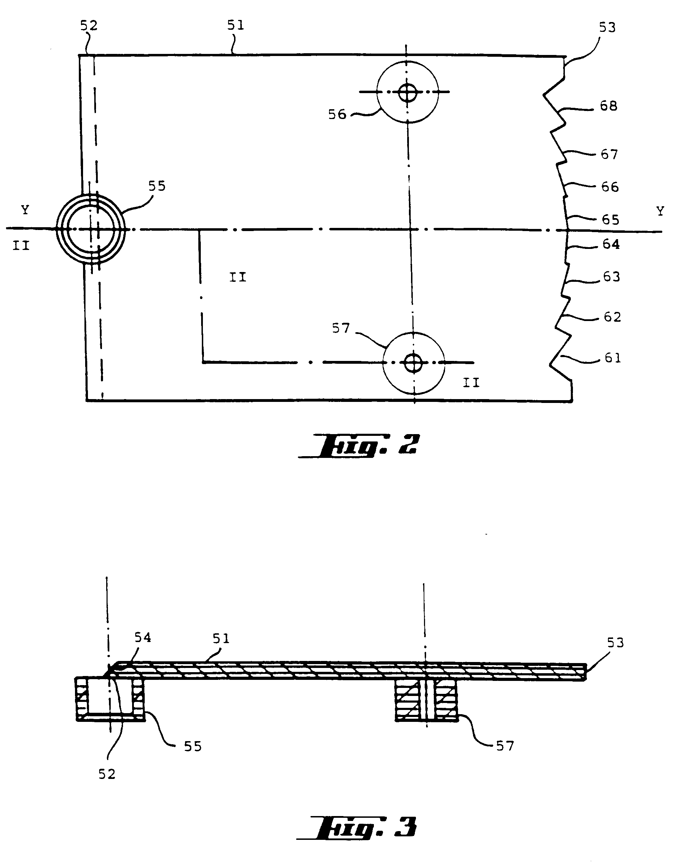

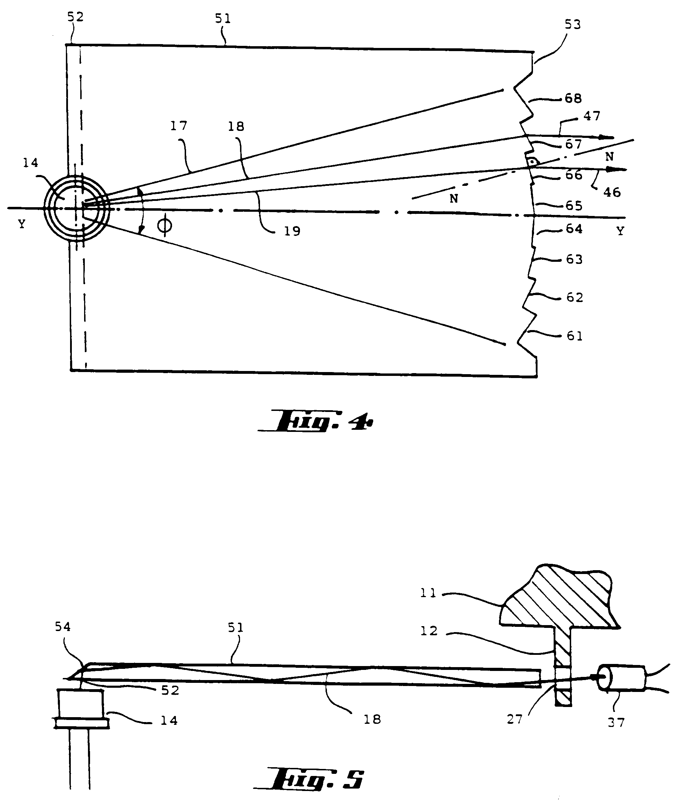

In einer bevorzugten Ausführungsform der Erfindung wird eine in den Figuren 2 und 3 dargestellte Lichtleitplatte 51 als Lichtleiter verwendet. Die Lichtleitplatte 51 hat an einem Ende eine Lichteingangsstelle 52 und am entgegengesetzten Ende eine Lichtausgangsstelle 53. Die Lichtleitplatte 51 hat eine gegenüber der Lichteingangsstelle 52 liegende, nach innen reflektierende Fläche 54, die gegen die Längsachse der Lichtleitplatte 51 geneigt ist. Die Lichtausgangsstelle ist 53 eine Wand, die ebene Wandsegmente 61-68 enthält, die mit einer zur Längsachse Y-Y der Lichtleitplatte normalen Ebene Winkel bilden, deren Grösse mit dem Abstand des Wandsegments von der Längsachse Y-Y der Lichtleitplatte 51 zunehmen.

Die untere Wand der Lichtleitplatte 51 wird auf drei zylindrische Trägerelemente 55, 56, 57 mit einem geeigneten Klebmittel befestigt. Im Hohlraum des Trägerelements 55 wird eine als Lichtquelle verwendete lichtemittierende Diode (LED) angeordnet.

Die Lichtleitplatte 51 ist z.B. aus Polymethylmethacrylat (PMMA). Sie kann aber auch aus einem anderen Kunststoff mit ähnlichen optischen Eigenschaften oder aus Glas sein. Wichtig bei der Wahl des Materials der Lichtleitplatte ist, dass es eine gute Transmission des Lichtes und kleine Reflexionsverluste bei der Wellenlänge der verwendeten Lichtquelle ermöglicht. Die Wand 53 bzw. mindestens deren Segmente 61-68 sind poliert.

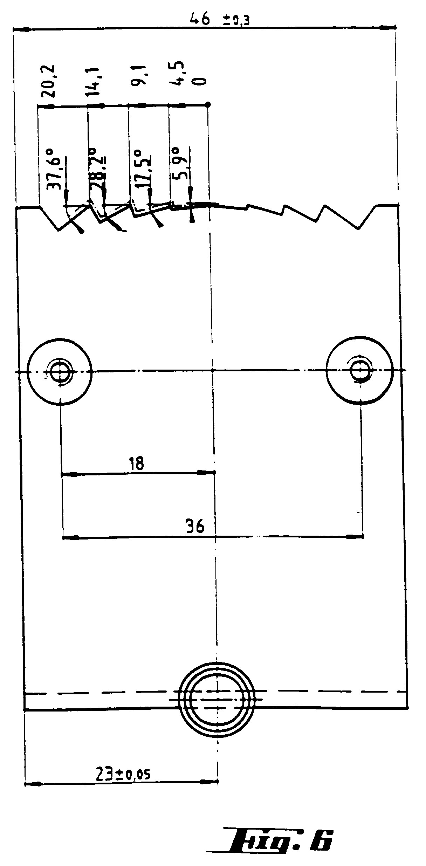

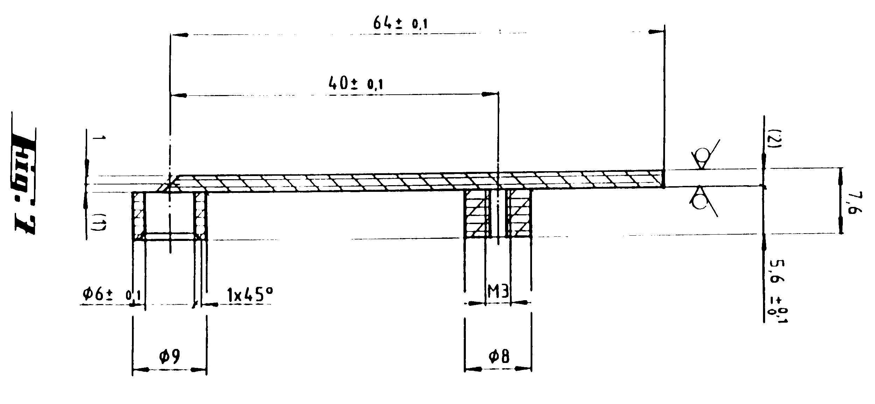

Der Verlauf der Lichtstrahlen in der Lichtleitplatte 51 ist in den Figuren 4 und 5 schematisch dargestellt. Die Lichtquelle 14 sendet den in Fig. 1 dargestellten Lichtbündel 16 aus, das durch die Lichteingangsstelle 52 in die Lichtleitplatte 51 gelangt und darin an der reflektierenden Fläche 54 reflektiert wird. Wie aus Fig. 4 ersichtlich, entsteht dadurch ein Lichtbündel 17, das einen Oeffnungswinkel $\phi$ hat. In der Fig. 4 werden zwei Strahlen 18 und 19 des Lichtbündels 17 dargestellt. Wie in der Fig. 5 für den Strahl 18 dargestellt, werden die obere und die untere Wand der Lichtleitplatte 51 von den Lichtstrahlen des Lichtbündels 17 so flach getroffen, dass Totalreflexion eintritt. Das Licht kann daher die Lichtleitplatte 51 nicht durch diese Wände verlassen. Wie in der Fig. 5 gezeigt, wird also jeder Lichtstrahl des Lichtbündels 17 von Wand zu Wand reflektiert, bis er auf der aus Wandsegmenten bestehende Wand 53 trifft. In Fig. 5 ist ein Einfallslot N-N dargestellt. Lichtstrahlen, die wie 18 und 19 in Fig. 4 fast senkrecht auf einem Wandsegment wie z.B. 66 bzw. 67 treffen, werden gebrochen und verlassen die Lichtleitplatte 51 in einer Richtung die annähernd parallel zur Längsachse Y-Y der Lichtleitplatte 51 ist. Dies ist in Fig. 4 für Lichtstrahlen 46 und 47 gezeigt, die durch Brechung der Lichtstrahlen 19 bzw. 18 entstehen. Die aus den Wandsegmenten 61-68 austretende Lichtstrahlen treffen auf die ihnen zugeordneten und in Fig. 1 gezeigten Felder 21-28. Ist das Feld lichtdurchlässig, trifft das Lichtstrahl auf einem dem Feld zugeordneten Lichtempfänger. Auf diese Weise trifft z.B. der Strahl 18 in Figuren 4 und 5 auf den Lichtempfänger 37.

Um den soeben beschriebenen Verlauf der durch die Wandsegmente 61-68 austretenden Lichtstrahlen zu erreichen, wird die dafür erforderliche Lage dieser Wandsegmente gewählt. Hierfür wird anhand des Brechungsgesetzes und unter Berücksichtigung der Brechungszahl des Materials der Lichtleitplatte 51 gegen Luft der Winkel berechnet, der jedes Wandsegment mit einer Senkrecht zur Längsachse Y-Y liegenden Ebene bilden soll.

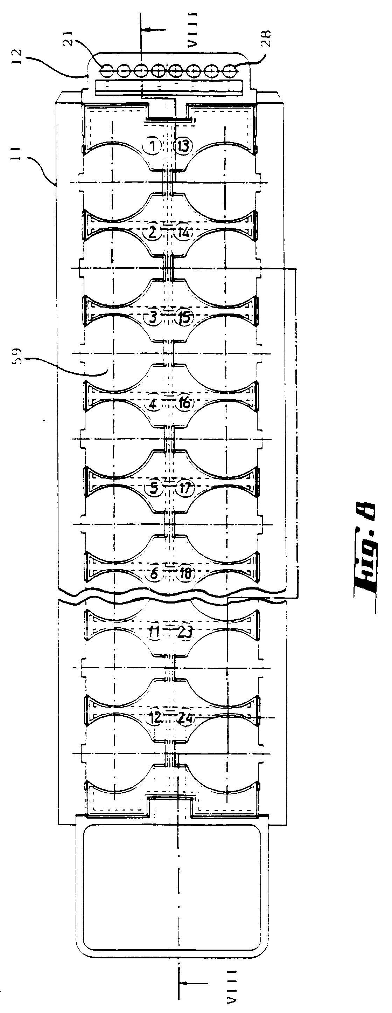

In der Fig. 6 werden die für die Wandsegmente 65-68 in Fig. 4 ermittelten Winkel für eine aus Polymethylmethacrylat (PMMA) hergestellten Lichtleitplatte 51 und einige Abmessungen eines Ausführungsbeispiels dieser Platte in Millimeter angegeben. Weitere Abmessungen derselben Platte sind in der Fig. 7 in Millimeter angegeben. Die erforderliche Breite der Lichtleitplatte 51 ist weitgehend durch die Breite der Anordnung der Felder 21-28 des Behälterträgers 11 bestimmt. Die erforderliche Länge der Lichtleitplatte ist im wesentlichen durch ihre Breite und durch den Oeffnungswinkel $\phi$ des Lichtbündels 17 in Fig. 4 bestimmt. Dieser Oeffnungswinkel ist durch den Oeffnungswinkel (Strahlungscharakteristik) der Lichtquelle 14 bestimmt. Für die Wahl einer geeignete Dicke der Lichtleitplatte 51 ist zu berücksichtigen, dass sie klein genug sein sollte, damit die oben erwähnten Totalreflexionen eintreten. Für eine gute Nutzung der von der Lichtquelle abgegebenen Energie sollte andererseits ein möglichst grösser Teil des von der Lichtquelle 14 ausgestrahlten Lichtbündels 16 in die Lichtleitplatte gelangen. Hierfür sind die Dicke der Lichtleitplatte und eine geeignete Lichtquelle zu wählen, die ein Lichtbündel mit einem zur Dicke der Lichtleitplatte passenden Oeffnungswinkel erzeugt, so dass der grösste Teil des Lichtbündels auf die Fläche 54 trifft.

Im vorliegenden Ausführungsbeispiel wird als Lichtquelle 14 z.B. eine von Siemens hergestellte lichtemitierende Diode mit der Bezeichnung SFH 485P und als Lichtempfänger 31-38 ein dazu passendes Element z.B. ein NPN Silikon-Photodarlington mit der Bezeichnung OP300, das von der Optoelektronics Division der TRW Electronic Components Group hergestellt wird.

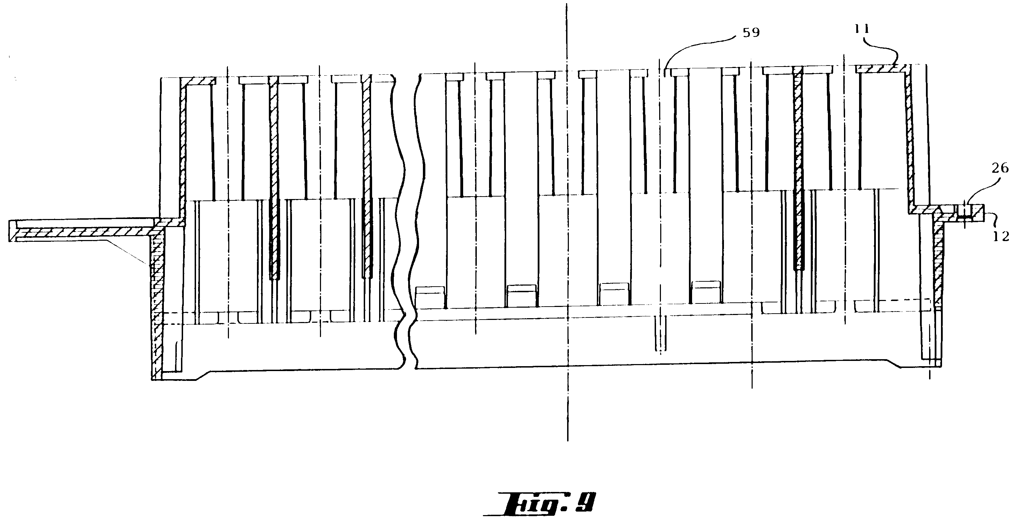

Fig. 8 zeigt eine Draufsicht eines Behälterträgers 11 für ein automatisches Analysensystem, das z.B. in einem medizinischen Diagnostiklabor verwendet wird. Dieser Träger hat eine Anzahl Kammer 59 zur Aufnahme von Behältern, z.B. von Behältern, die biologische Proben enthalten. Ein Rand 12 des Trägers 11 hat eine Anordnung von Feldern 21-28 in denen eine jeweils eine Oeffnung vorhanden ist oder nicht, um einen binären Code zu definieren und damit eine Identifikation des Trägers zu ermöglichen. Ein solcher Träger kann mittels der oben beschriebene Vorrichtung identifiziert werden.

Fig. 9 zeigt einen Querschnitt des Behälterträgers 11 entlang der Linie VIII-VIII in Fig. 8.

**Patentansprüche**

1. Vorrichtung zur Identifikation von einem Behälterträger (11) für ein automatisches Analysengerät, welcher Träger an einem scheibenförmigen Rand (12) eine Anordnung von Feldern (21-28) hat, wobei einige der Felder lichtdurchlässig und die übrigen Felder lichtundurchlässig sind, und welche Vorrichtung eine elektrooptische Einrichtung enthält, mit der feststellbar ist, ob jedes der Felder lichtdurchlässig oder lichtundurchlässig ist,

dadurch gekennzeichnet, dass die elektrooptische Einrichtung folgende Komponenten enthält:
(a) eine Lichtquelle (14),
(b) eine Vielzahl von Lichtempfängern (31-38), die je einem der Felder (21-28) zugeordnet sind,

(c) einen Lichtleiter (15), der aus einem mit der Lichtquelle (14) erzeugten Lichtbündel (16) eine Vielzahl von Lichtstrahlen (41-48) erzeugt, die je gegen einen der Felder (21-28) gerichtet sind und durch die lichtdurchlässigen Felder die ihnen zugeordneten Lichtempfänger erreichen.

2. Vorrichtung gemäss Anspruch 1, dadurch gekennzeichnet, dass der Lichtleiter (15) eine Lichtleitplatte (51) enthält, die an einem Ende eine Lichteingangsstelle (52) und am entgegengesetzten Ende eine Lichtausgangsstelle (53) hat, dass die Lichtleitplatte (15) eine gegenüber der Lichteingangsstelle (52) liegende, nach innen reflektierende Fläche (54) hat, die gegen die Längsachse (Y-Y) der Lichtleitplatte (51) geneigt ist, und dass die Lichtausgangsstelle (53) eine Wand ist, die ebene Wandsegmente (61-68) enthält, die mit einer zur Längsachse (Y-Y) der Lichtleitplatte normalen Ebene Winkel bilden, deren Grösse mit dem Abstand des Wandsegments von der Längsachse der Lichtleitplatte (51) zunehmen.

**Fig. 1**

*Fig. 2*

*Fig. 3*

**Fig. 4**

**Fig. 5**

*Fig. 6*

*Fig. 7*

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-1 429 052 (VEB MEDIZIN-UND-LABORTECHNIK) <br> * Seite 2, Zeile 109 - Seite 3, Zeile 14 * <br> --- | 1 | B01L9/06 <br> G06K7/10 <br> G02B6/00 <br> G01N35/00 |
| A | US-A-4 114 045 (F. SHIINA) <br> * Spalte 4, Zeile 59 - Spalte 5, Zeile 12; Abbildungen 2,3,5 * <br> --- | 1,2 | |
| A | US-A-3 897 216 (A.R. JONES) <br> * Spalte 3, Zeile 22 - Zeile 42; Abbildungen 2,5,6 * <br> --- | 1 | |
| A | US-A-4 057 148 (R. MEYER ET AL.) <br> * Spalte 10, Zeile 25 - Zeile 44 * <br> --- | 1 | |
| A | GB-A-896 280 (FERRANTI LTD) <br> * Seite 1, Zeile 75 - Zeile 86 * <br> --- | 1,2 | |
| A | US-A-3 248 554 (WU CHEN) <br> * Spalte 1, Zeile 8 - Zeile 40 * | 1,2 | |
| | ----- | | **RECHERCHIERTE SACHGEBIETE (Int. Cl.5)** <br><br> B01L <br> G06K <br> G02B <br> G01N |

Der vorliegende Recherchenbericht wurde für alle Patentansprüche erstellt

| Recherchenort | Abschlußdatum der Recherche | Prüfer |
|---|---|---|
| DEN HAAG | 06 FEBRUAR 1992 | HODSON C.M. |